# EUROPEAN PATENT APPLICATION

(11) **EP 1 759 751 A1**
(43) Date of publication of application: **07.03.2007**
(21) Application number: 05019247.5
(22) Date of filing: 05.09.2005
(51) Int. Cl.: B01D 11/04, B01J 19/30, B01J 19/32

(54) **Supercritical fractionating apparatus and process**

(71) Applicant: Far East College, Sinshih Township T'ai nan 744 (TW)
(72) Inventor: Chung, Ming-Chi, Houli Township Taichung County 421 (TW); Sheu, Shane-Rong, Yongkang Village Yongkang City (TW); Tang, Hui-Chuan, Dashe Township Kaoshiung County 815 (TW); Tsai, Chih-Ho, Zihguan Township Kaohsiung County 826 (TW)
(74) Representative: Becker Kurig Straus

(57) **Abstract**

The present invention provides a super fractionating apparatus and process, consisting of a fractionation column having an adsorbent body that assists in the fractionation process, and further includes a carbon dioxide supply unit, a carbon dioxide flow pipe, a raw material supply unit and a raw material flow pipe. The carbon dioxide flow pipe connects to the carbon dioxide supply unit and the fractionating column, and a pressure unit and a temperature control unit are configured on the carbon dioxide flow pipe. The raw material flow pipe connects to the raw material supply unit and the fractionating column, and a pressure unit is configured on the raw material flow pipe. The fractionating column having the adsorbent body disposed therein causes turbulence in the fluid within the fractionating column, thereby increasing fractionation efficiency and assisting in stabilizing the extracts, which facilitates collection thereof.

## Description

### BACKGROUND OF THE INVENTION

### (a) Field of the Invention

The present invention relates to a supercritical fractionating apparatus and process, and more particularly to a supercritical fractionating apparatus and process that uses a supercritical fluid to fractionate out specific substances from liquid state raw material. Moreover, the present invention uses an adsorbent body disposed within a fractionation column to adsorb the aforementioned specific substances, thereby increasing fractionation efficiency and stabilizing the extracts.

### (b) Description of the Prior Art

The conventional manufacturing process using supercritical fluid to extract substances from raw material first packs the solid raw material into a fractionation column in batches, and pressurized carbon dioxide is then channeled into the fractionation column. When the carbon dioxide enters a supercritical state it removes specific substances from the raw material, thereby enabling certain specific components to be separated and fractionated out from the raw material. After collecting the extracts and removing the carbon dioxide raffinate after completing fractionation, the entire batch of raw material is poured out, thereby emptying the fractionation column.

The aforementioned method using supercritical fluid to extract specific substances from raw material primarily extracts certain specific components. Hence, in general, after completing the extraction process, it is necessary to empty the raw material from the fractionation column to facilitate repacking of solid raw material and proceeding with the next batch extraction. However, during the operating process, repeated packing and removing of raw material greatly increases operating time and reduces extraction efficiency.

### SUMMARY OF THE INVENTION

The present invention resolves the problems of conventional extraction apparatuses that require interrupting the extraction operating process to replace raw material.

The present invention also resolves the problem of conventional extraction apparatuses that are unable to adequately retain the extracts.

The present invention relates to a super fractionating apparatus comprising:
a carbon dioxide supply unit used to supply carbon dioxide gas;
a carbon dioxide flow pipe that connects to the aforementioned carbon dioxide supply unit, a pressure unit and a temperature control unit are configured on the carbon dioxide flow pipe, and the carbon dioxide flow pipe further connects to a fractionation column;
a raw material supply unit used to hold raw material containing added dissolvent; and the raw material in a liquid state is then channeled into the fractionation column;
a raw material flow pipe that connects to the aforementioned raw material supply unit, a pressure unit is configured on the raw material flow pipe, and the raw material flow pipe further connects to the fractionation column;
the fractionation column with an adsorbent body having large surface area disposed therein used to slow down the flow speed of the carbon dioxide and adsorb the extracts; the fractionation column further includes an extract flow pipe and a raffinate flow pipe.

The aforementioned extract flow pipe is further configured with a valve.

The aforementioned adsorbent body disposed within the aforementioned fractionation column can comprise a plurality of independent bodies such as granulated bodies, strip-form bodies, sheet-form bodies, and so on.

The aforementioned adsorbent body disposed within the aforementioned fractionation column can be a porous body.

The aforementioned adsorbent body disposed within the aforementioned fractionation column can be a body having a plurality of branches.

The aforementioned adsorbent body disposed within the aforementioned fractionation column can be a continuously curved body.

The aforementioned fractionation column comprises a supercritical fractionating apparatus having an adsorbent body disposed therein. A liquid state raw material is retained within the fractionation column for a fixed period of time, the retaining time being that required to fractionate specific components, whereafter the liquid state raw material and carbon dioxide are rapidly removed from the fractionation column. Hence, the fractionation column can be quickly emptied ready for fractionating the next batch of raw material.

The present invention further relates to a supercritical fractionating process having the following steps:
(A) The fractionation column is provided with supercritical carbon dioxide;
(B) Pressurized liquid state raw material is channeled into the fractionation column;
(C) Specific components are fractionated from the raw material within the fractionation column;
(D) The adsorbent body within the fractionation column adsorbs the extracts;
(E) The extracts are collected;
(F) Supercritical raffinate is channeled out the fractionation column.

The adsorbent body of the aforementioned fractionation column has a large surface area that effectively increases adsorption of the extracts.

The present invention is able to achieve the following functions:
1. The adsorbent body having large surface area disposed within the fractionation column according to the present invention slows down the flow speed of the carbon dioxide within the fractionation column. Moreover, a distinct turbulent flow phenomenon in the pressurized carbon dioxide occurs after being channeled into the fractionation column, which increases the opportunity for ample mixing of the carbon dioxide and the raw material to be fractionated, thereby improving fractionation efficiency.
2. The adsorbent body disposed within the fractionation column according to the present invention increases surface area for adsorption of the extracts within the fractionation column, which assists in stabilizing the extracts and facilitates collection thereof.

To enable a further understanding of said objectives and the technological methods of the invention herein, brief description of the drawings is provided below followed by detailed description of the preferred embodiments.

### BRIEF DESCRIPTION OF THE DRAWINGS

FIG. 1 shows a schematic view of a fractionating apparatus according to the present invention.
FIG. 2 shows a structural view of a fractionation column depicting temperature control adopted according to the present invention.
FIG. 3 shows a schematic view of a second embodiment of an adsorbent body within the fractionation column according to the present invention.
FIG. 4 shows a schematic view of a third embodiment of an adsorbent body within the fractionation column according to the present invention.
FIG. 5 shows a schematic view of a fourth embodiment of an adsorbent body within the fractionation column according to the present invention.

### DETAILED DESCRIPTION OF THE PREFERRED EMBODIMENTS

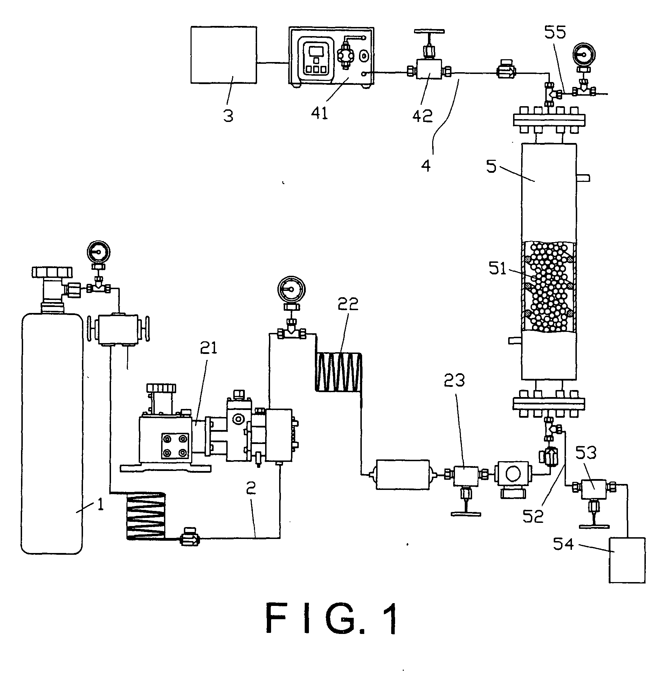

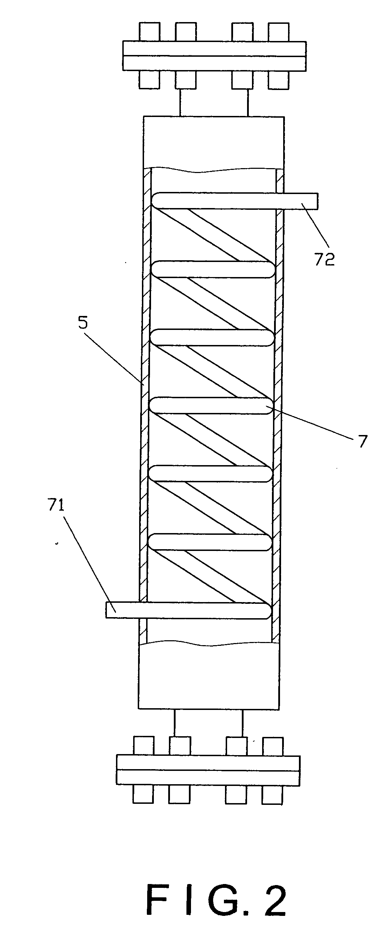

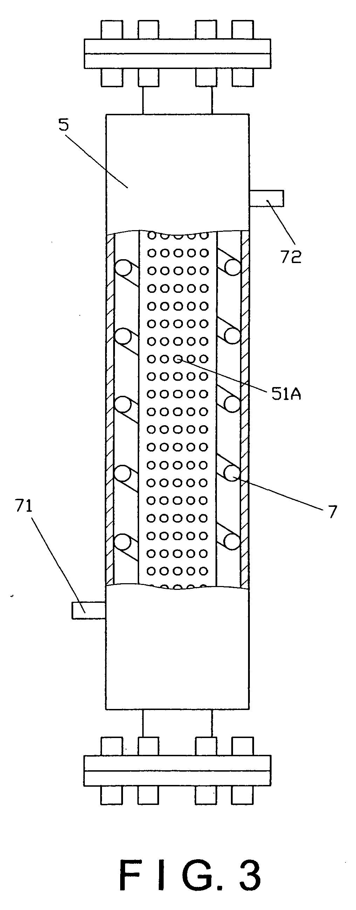

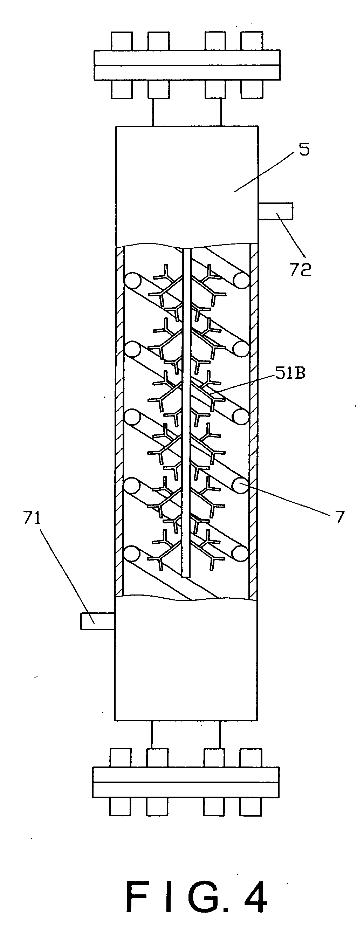

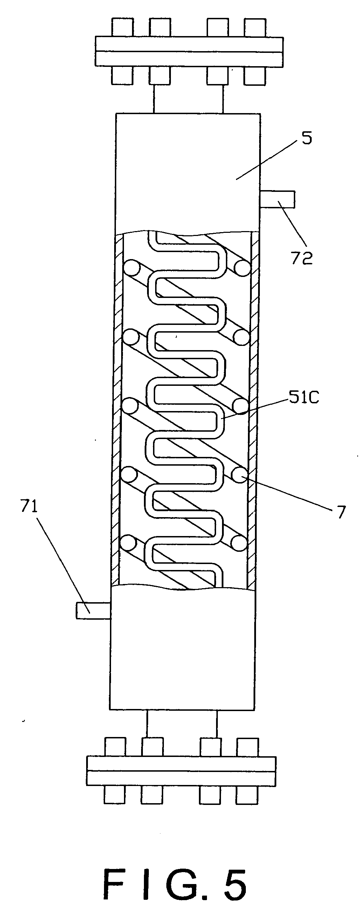

Referring to FIG. 1, which shows the present invention comprising a carbon dioxide supply unit (1), a carbon dioxide flow pipe (2), a raw material supply unit (3), a raw material flow pipe (4) and a fractionation column (5); wherein:
The carbon dioxide supply unit (1) is used to supply carbon dioxide gas, and serves as a gas storage tank.
The carbon dioxide flow pipe (2) connects to the aforementioned carbon dioxide supply unit (1), and a pressure unit (21) and a temperature control unit (22) are configured on the carbon dioxide flow pipe (2). Temperature and pressure of the carbon dioxide are controlled while being channeled through the carbon dioxide flow pipe (2). The carbon dioxide flow pipe (2) is further connects to the fractionation column (5).
The raw material supply unit (3) is used to hold the raw material containing added dissolvent, which causes the raw material to form a liquid state.
One end of the raw material flow pipe (4) connects to the aforementioned raw material supply unit (3). A material feed pressure unit (41) and a material feed rate control valve (42) are configured on the raw material flow pipe (4). Another end of the raw material flow pipe (4) connects to the fractionation column (5).
Interior of the fractionation column (5) comprises an adsorbent body (51) having large surface area, which can consist of a plurality of independent bodies such as granulated bodies, strip-form bodies, sheet-form bodies, and so on. The adsorbent body (51) used in an embodiment of the present invention consists of a plurality of glass beads. An extract flow pipe (52) connects to a bottom portion of the fractionation column (5), and a valve (53) is configured at a front end of an outlet of the extract flow pipe (52). The extract flow pipe (52) then further connects to a storage tank (54). A raffinate flow pipe (55) is configured at a top end of the fractionation column (5).
When operating the fractionating apparatus, material feed rate control valves (23) (42) of the carbon dioxide flow pipe (2) and the raw material flow pipe (4) respectively are open. The carbon dioxide supply unit (1) supplies carbon dioxide that is pressurized and temperature controlled by passing through the pressure unit (21) and the temperature control unit (22) of the carbon dioxide flow pipe (2) respectively, and then channeled into the fractionation column (5), wherein the carbon dioxide enters a supercritical state under specific pressure and temperature conditions. The raw material supply unit (3) supplies raw material in a liquid state, which is pressurized by passing through the pressure unit (41), and then delivered to the fractionation column (5). The aforementioned carbon dioxide in supercritical state fractionates specific components from the liquid state raw material.
The adsorbent body (51) disposed within the fractionation column (5) slows down the flow speed of the carbon dioxide within the fractionation column (5). Moreover, a distinct turbulent flow phenomenon in the pressurized carbon dioxide occurs after being channeled into the fractionation column (5), which increases the opportunity for ample mixing of the carbon dioxide and the raw material to be fractionated, thereby enhancing fractionation efficiency. Furthermore, the adsorbent body (51) within the fractionation column (5) increases surface area for adsorption of the extracts within the fractionation column (5), thereby providing a more stable supercritical fractionating environment.
The fractionated extracts collect at the bottom of the fractionation column (5), and the valve (53) controls channeling the extracts out to the exterior storage tank (54), wherein the extracts are stored. The raffinate formed from a mixture of the carbon dioxide and the post-fractionation raw material flows out from the raffinate flow pipe (55) at the top of the fractionation column (5).
Referring to FIG. 2, which depicts temperature control means adopted during the operation process of the aforementioned fractionation column (5), wherein a temperature control piping (7) winds round and is thereby configured on an inner circumferential edge of the fractionation column (5) [the adsorbent body (51) is omitted in FIG. 2]. An inlet (71) of the temperature control piping (7) is defined at a lower end of the fractionation column (5), and the temperature control piping (7) then winds round the inner circumference of the fractionation column (5) to reach the top portion of the fractionation column (5) where an outlet (72) is defined at an upper end of the temperature control piping (7),
A temperature regulating liquid is fed into the inlet (71) of the temperature control piping (7), wherein it winds round within the fractionation column (5) and carries out heat exchange before being channeled out the outlet (72), thereby effectively controlling work temperature of the fractionation column (5), which is controlled between 30°C~60°C according to properties of the extracts required.
Referring to FIG. 3, which shows a second embodiment of the present invention incorporating an adsorbent body (51A) within the fractionation column (5) that is designed as a single porous body or as a plurality of porous bodies.
Referring to FIG. 4, which shows a third embodiment of the present invention incorporating an adsorbent body (51B) within the fractionation column (5) that is designed as a single body or a multiple of bodies having a plurality of branches. The adsorbent body (51B) depicted in FIG. 4 is designed from a single body having a plurality of braches.
Referring to FIG. 5, which shows a fourth embodiment of the present invention incorporating an adsorbent body (51C) within the fractionation column (5) that is designed as a single continuously curved body or as a multiple of continuously curved bodies. The curve is of spiral form, circumrotating form or wave form. The adsorbent body (51C) depicted in FIG. 5 is designed from a single continuously curved body of circumrotating form.
It is of course to be understood that the embodiments described herein are merely illustrative of the principles of the invention and that a wide variety of modifications thereto may be effected by persons skilled in the art without departing from the spirit and scope of the invention as set forth in the following claims.

## Claims

1. A super fractionating apparatus comprising:
a carbon dioxide supply unit used to supply carbon dioxide gas;
a carbon dioxide flow pipe that connects to the carbon dioxide supply unit, a pressure unit and a temperature control unit are configured on the carbon dioxide flow pipe, and the carbon dioxide flow pipe further connects to a fractionation column;
a raw material supply unit used to hold raw material containing added dissolvent;
a raw material flow pipe that connects to the raw material supply unit, a pressure unit is configured on the raw material flow pipe, and the raw material flow pipe further connects to the fractionation column;
the fractionation column with an adsorbent body having large surface area disposed therein used to slow down the flow speed of the carbon dioxide and adsorb extracts; the fractionation column further comprises an extract flow pipe and a raffinate flow pipe.

2. The super fractionating apparatus according to claim 1, wherein the adsorbent body within the fractionation column comprises a plurality of independent bodies.

3. The super fractionating apparatus according to claim 2, wherein the plurality of independent bodies are granulated bodies.

4. The super fractionating apparatus according to claim 2, wherein the plurality of independent bodies are strip-form bodies.

5. The super fractionating apparatus according to claim 2, wherein the plurality of independent bodies are sheet-form bodies.

6. The super fractionating apparatus according to claim 1, wherein the adsorbent body within the fractionation column is a porous body.

7. The super fractionating apparatus according to claim 1, wherein the adsorbent body within the fractionation column is a body having a plurality of branches.

8. The super fractionating apparatus according to claim 1, wherein the adsorbent body within the fractionation column is a continuously curved body.

9. A super fractionating process comprising steps:
(a) supplying of supercritical carbon dioxide to a fractionation column ;
(b) channeling of pressurized liquid state raw material into the fractionation column;
(c) fractionating of specific components from the raw material within the fractionation column;
(d) adsorbing of extracts by the adsorbent body within the fractionation column;
(e) collecting of the extracts;
(f) channeling out of supercritical raffinate from the fractionation column.

10. The super fractionating process according to claim 9, wherein the adsorbent body within the fractionation column has a large surface area that effectively increases adsorption of the extracts.
